# DEMANDE DE BREVET EUROPEEN

(11) **EP 0 652 653 A1**
(43) Date de publication de la demande: **10.05.1995**
(21) Numéro de dépôt: 94402510.5
(22) Date de dépôt: 07.11.1994
(51) Int. Cl.: H04B 10/18

(54) **Procédé de télécommunication à fibres optiques, liaison appliquant ce procédé et système de pompage pour mélange à quatre ondes, notamment pour cette liaison**

(30) Priorité: 09.11.1993 FR 9313346
(71) Demandeur: ALCATEL N.V., NL-1077 XX Amsterdam (NL)
(72) Inventeur: Chesnoy, Jose, F-75014 Paris (FR)
(74) Mandataire: Bourely, Paul

(57) **Abrégé**

Des ondes optiques (W1, W2) portant un signal à transmettre (S) sont guidées dans une ligne constituée de fibres optiques présentant une dispersion chromatique. Pour compenser des effets de cette dispersion on provoque en un point intermédiaire de la ligne un phénomène de mélange à quatre ondes à l'aide d'une lumière de pompage injectée dans une fibre de mélange (8). Selon l'invention cette lumière de pompage est constituée de deux ondes de pompe (P1, P2). Les polarisations (V1, V2) de ces deux ondes sont orthogonales. Leurs fréquences optiques (νP1, νP2) sont sensiblement symétriques l'une de l'autre par rapport à une fréquence neutre (νo) annulant la dispersion chromatique de cette fibre de mélange.

L'invention s'applique notamment aux liaisons de grandes longueurs.

## Description

La présente invention concerne les télécommunications à fibres optiques. Elle concerne plus particulièrement la réalisation de liaisons de grandes longueurs utilisant de telles fibres pour transmettre un débit élevé d'information.

Le prix des fibres nécessaires pour constituer la ligne de transmission d'une telle liaison constitue une partie importante du coût total de cette liaison. C'est pourquoi de nombreux réseaux de télécommunication utilisent des fibres qui ont l'avantage d'être relativement peu coûteuses mais qui ont l'inconvénient de présenter, pour les longueurs d'onde utilisées, une dispersion chromatique non négligeable. Ces fibres seront dites ci-après "standard". Il résulte de leur utilisation que la recherche d'une élévation du débit ou de la distance d'une transmission d'information à ces longueurs d'onde se heurte à une déformation des signaux provoquée par leur dispersion. Plus spécifiquement, à la longueur d'onde typique de 1,55 µm, cette déformation limite la transmission d'un signal modulé en amplitude (NRZ) à environ 90km à 10 Gbit/s. Elle pose ainsi un problème important.

Des solutions connues à ce problème utilisent une compensation passive de la dispersion. Elles mènent à des coûts très élevés.

Une autre solution a été proposée par un article COMPENSATION OF FIBRE CHROMATIC DISPERSION BY SPECTRAL INVERSION - R.M. Jopson, A.H. Gnauck and R.M. Derosier. - ELECTRONICS LETTERS 1st april 1993 -vol.29 - n°7.

Cette solution proposée consiste à inverser à mi-parcours la phase optique d'une onde portant le signal. On utilise pour cela un phénomène dit "de mélange à quatre ondes" entrainant une conjugaison de phase. Plus spécifiquement on mélange une onde incidente modulée par le signal à transmettre et dite ci-après "onde amont", avec une onde de pompe puissante et continue, ceci dans une fibre de mélange. La fréquence optique νo de cette onde de pompe, dite ci-après "fréquence de pompe" doit coïncider avec une fréquence neutre νo qui annule la dispersion de la fibre de mélange, cette dernière devant pour cela être du type à dispersion décalée. Par ailleurs la polarisation de l'onde de pompe doit être linéaire et parallèle à celle de l'onde amont. Une onde aval est alors engendrée avec une phase inversée par rapport à l'onde amont et la fréquence optique νa de cette onde aval est symétrique de la fréquence optique νs de l'onde amont par rapport à la fréquence neutre νo. L'onde aval peut donc être filtrée avant amplification et propagation dans le tronçon de ligne suivant qui est constitué de fibres ordinaires.

Cette solution proposée apparait difficilement applicable à la réalisation pratique d'une liaison optique, notamment de grande longueur et à grand débit. Il apparait alors en effet que l'onde aval ainsi engendrée présente une puissance fortement et rapidement variable. A la réception ces variations de puissance empêchent une restitution correcte de l'information qui était à transmettre c'est-à-dire qu'elles font apparaître un taux d'erreurs élevé.

La présente invention a notamment pour buts de permettre:
- de diminuer le taux d'erreur et/ou le coût d'une liaison à fibres optiques,
- d'augmenter la longueur et/ou le débit d'information de cette liaison,
- de compenser pour cela plus efficacement les effets de la dispersion chromatique de fibres ordinaires à l'aide d'un phénomène de mélange à quatre ondes engendrant une onde aval à phase inversée par rapport à une onde amont,
- et plus généralement d'augmenter l'utilité d'un tel phénomène en affranchissant la puissance de cette onde aval de variations qui apparaissent lorsque un tel procédé est mis en oeuvre dans des conditions éloignées de celles d'un laboratoire.

Dans ces buts elle a notamment pour objet un procédé de télécommunication à fibres optiques, procédé selon lequel des ondes optiques portant un signal à transmettre sont guidées dans une ligne constituée de fibres optiques présentant une dispersion chromatique, et selon lequel un phénomène de mélange à quatre ondes est provoqué en au moins un point intermédiaire de cette ligne par une lumière de pompage injectée dans une fibre de mélange pour compenser des effets de cette dispersion, ce procédé étant caractérisé par le fait que cette lumière de pompage est constituée de deux ondes de pompe, les polarisations de ces deux ondes étant orthogonales l'une à l'autre, leurs fréquences optiques étant sensiblement symétriques l'une de l'autre par rapport à une fréquence neutre annulant la dispersion chromatique de cette fibre de mélange.

L'utilisation de ces deux ondes de pompe rend la puissance de l'onde aval indépendante de la polarisation de l'onde amont. Elle évite ainsi que cette puissance varie en raison de variations de cette polarisation. Cette invention présente donc un avantage important dans tous les cas où la polarisation de l'onde amont présente des variations aléatoires. Tel est notamment le cas en un point intermédiaire d'une liaison optique de grande longueur.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

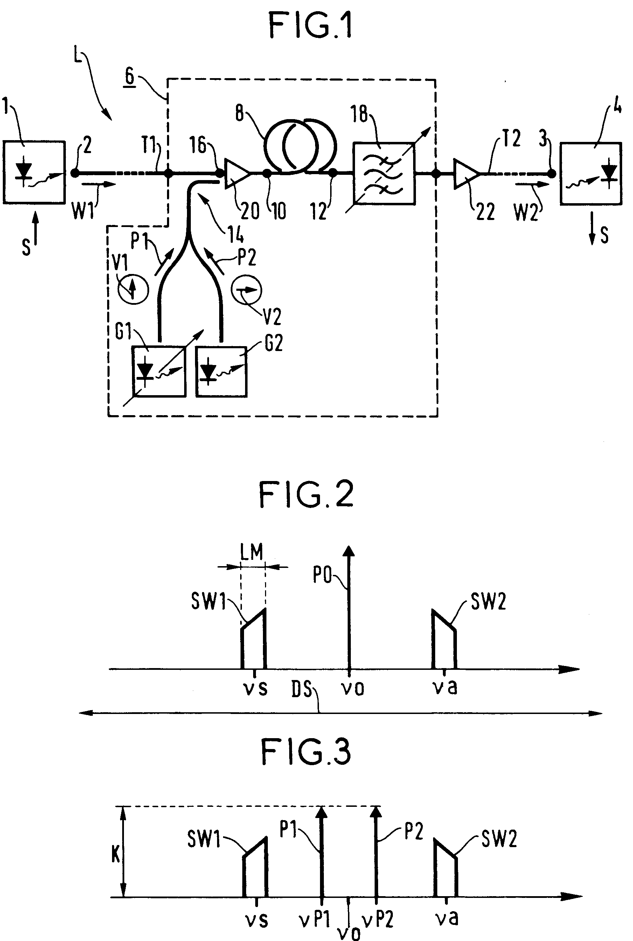

La figure 1 représente une vue d'une liaison optique selon cette invention.

La figure 2 représente un spectre d'ondes optiques apparaissant dans un ensemble de mélange à quatre ondes connu.

La figure 3 représente un spectre d'ondes optiques apparaissant dans un ensemble de mélange à quatre ondes inclus dans la liaison de la figure 1.

La liaison à fibres optiques donnée en exemple comporte les éléments suivants:
- Un émetteur 1 recevant un signal S représentatif d'une information à transmettre. Cet émetteur émet en réponse une onde de départ W1 constituée par une onde porteuse optique qui est modulée pour porter ce signal. Cette onde présente un spectre de modulation SW1 dont la largeur LM est représentative du débit d'information de ce signal. Sa polarisation est typiquement linéaire.
- Une ligne optique L présentant une entrée 2 pour recevoir l'onde de départ, et une sortie 3 à distance de cette entrée pour restituer en réponse une onde d'arrivée W2 qui est formée à partir de cette onde de départ de manière à porter aussi le signal S.
- Enfin un récepteur 4 recevant l'onde d'arrivée W2 pour restituer en réponse le signal S.

La ligne L comporte une succession de tronçons T1, 8, T2 raccordés optiquement en série entre l'entrée 2 et la sortie 3 et constitués de fibres optiques de la ligne. Ces fibres sont aptes à guider des ondes ayant des fréquences optiques comprises dans un domaine spectral DS de cette ligne, ce domaine incluant les fréquences Vs et Va des ondes de départ et d'arrivée. Cette succession de tronçons inclut un tronçon dispersif amont T1 et un tronçon dispersif aval T2 dans lesquels les fibres optiques de la ligne sont des fibres standard. Ces fibres sont telles que ces deux tronçons présentent dans le domaine spectral de la ligne des dispersions chromatiques d'un même signe. Ces dispersions entraînent des décalages progressifs entre diverses composantes spectrales des ondes qui sont guidées par cette ligne. Elles provoquent ainsi, pour le signal restitué à la sortie de la ligne, des altérations qui doivent être au moins limitées pour limiter le taux d'erreurs de la transmission.

Cette ligne comporte encore pour cela au moins un ensemble de mélange 6 interposé optiquement en série entre les tronçons dispersifs amont T1 et aval T2. Cet ensemble comporte lui-même un tronçon de mélange 8 typiquement constitué par une fibre de mélange présentant une dispersion chromatique nulle pour une fréquence neutre νo située dans le domaine spectral de la ligne. Une entrée 10 de ce tronçon de mélange reçoit une onde amont W1 qui est une onde optique formée à partir de l'onde de départ pour porter le signal S. Cette onde est fournie en sortie du tronçon amont T1 avec une fréquence porteuse amont νs inclue dans le domaine spectral de la ligne. Une sortie 12 de ce tronçon de mélange 8 fournit à une entrée du tronçon aval T2 une onde aval W2 qui a une fréquence porteuse νa inclue dans le domaine spectral de la ligne et à partir de laquelle l'onde d'arrivée sera formée. Plus particulièrement, dans la liaison donnée en exemple l'onde amont est directement constituée par l'onde de départ elle même après que celle-ci ait subi, dans une fraction initiale de la longueur de la ligne constituant le tronçon T1, des affaiblissements et des amplifications s'accompagnant notamment de variations aléatoires de sa polarisation. De même l'onde d'arrivée est directement constituée par l'onde aval après que celle-ci ait parcouru une fraction finale de la longueur de la ligne, cette fraction finale constituant le tronçon T2. La longueur du tronçon de mélange étant très faible vis-à-vis de la longueur totale de la ligne, ces deux fractions initiale et finale représentent chacune sensiblement une moitié de cette longueur totale.

L'ensemble de mélange comporte en outre un système de pompage comportant lui-même les éléments suivants:
- Un générateur de pompe fournissant une lumière de pompe spectralement centrée au voisinage de ladite fréquence neutre. Cette lumière présente une puissance suffisante pour provoquer des effets non linéaires dans le tronçon de mélange.
- Un coupleur de pompe 14 injectant cette lumière de pompe dans le tronçon de mélange 8 codirectionnellement avec l'onde amont W1 en un point d'injection de pompe 16. On provoque ainsi le phénomène de mélange à quatre ondes. Ce phénomène engendre l'onde aval W2 avec une fréquence νa et un spectre de modulation SW2 symétriques de la fréquence porteuse νs et du spectre de modulation SW1 de l'onde amont W1 par rapport à la lumière de pompage. Il impose en même temps une conjugaison de phase se traduisant par une inversion de phase entre cette onde aval et cette onde amont.
- Enfin un filtre de sortie de mélange 18 pour transmettre seulement l'onde aval.

Dans un ensemble de mélange à quatre ondes connu et réalisé en laboratoire l'onde amont présente une polarisation linéaire de direction invariable et contrôlée. La lumière de pompage est alors choisie pour présenter une fréquence optique égale à la fréquence neutre vo de la fibre de mélange et une polarisation linéaire parallèle à celle de l'onde amont.

Selon la présente invention le générateur de pompe comporte deux sources de pompe G1, G2 fournissant la lumière de pompage sous la forme de deux ondes de pompe présentant deux fréquences optiques νP1 et νP2 symétriques par rapport à une fréquence médiane de pompe. Cette fréquence médiane est égale à, ou au moins voisine de la fréquence neutre Vo du tronçon de mélange 8. Ces deux ondes de pompe présentent par ailleurs deux polarisations linéaires orthogonales V1, V2. Le coupleur de pompe 14 injecte ensemble ces deux ondes de pompe dans le tronçon de mélange 8. Dans ces conditions la puissance de l'onde aval W2 engendrée par le phénomène de mélange à quatre ondes devient indépendante de la polarisation présentée par l'onde amont W1 au point d'injection de pompe 16.

Plus précisément la fréquence médiane de pompe doit être telle que le tronçon de mélange présente en tous points de sa longueur deux dispersions chromatiques égales en valeurs absolues et opposées en signe pour deux fréquences symétriques l'une de l'autre par rapport à cette fréquence médiane, l'une de ces deux fréquences étant la fréquence porteuse de l'onde amont, l'autre étant donc la fréquence porteuse de l'onde aval.

Typiquement la dispersion chromatique des fibres optiques connues varie linéairement en fonction de la fréquence optique de sorte que la condition ci-dessus disant que deux dispersions chromatiques doivent être opposées pour deux fréquences symétriques par rapport à la fréquence médiane de pompe équivaut à la condition plus simple disant que la fréquence médiane de pompe doit être égale à la fréquence neutre du tronçon de mélange.

Dans le but d'éviter une altération du signal par des produits d'intermodulation les deux fréquences de pompe νP1, νP2 présentent une différence νP1-νP2 supérieure et de préférence très supérieure à la largeur LM du spectre de modulation de l'onde de départ.

De préférence les deux ondes de pompe P1, P2 présentent sensiblement une même puissance K. Qu'elles soient égales ou non ces deux puissances sont de préférence supérieures à 1 mW, par exemple comprises entre 1 et 5 mW. Le tronçon de mélange a de préférence une longueur supérieure à 1 km, par exemple de l'ordre de 10 km. Il est typiquement constitué d'une seule fibre optique.

De préférence le filtre de sortie de mélange 18 présente un taux de réjection supérieur à 20dB environ pour les ondes de pompe P1, P2 et l'onde amont W1.

Le système de pompage comporte avantageusement un amplificateur optique 20 pour amplifier à la fois les deux ondes de pompe P1, P2 et l'onde amont W1. La ligne L comporte typiquement d'autres amplificateurs tels que 22. Elle peut de plus comporter plusieurs ensembles de mélange répartis sur sa longueur.

Lors de la fabrication du système de pompage en vue de la réalisation future d'une liaison optique, l'une au moins des deux sources de pompe G1, G2, qui sont par exemple des lasers semiconducteurs monofréquence, et le filtre de sortie de mélange 18, qui est par exemple du type Fabry-Perot, sont de préférence choisis accordables. Cette accordabilité permettra notamment de rendre ultérieurement la fréquence médiane de pompe νo égale à la fréquence neutre d'une fibre de mélange 8 non encore définie.

Dans l'exemple décrit ci-dessus les fréquences de pompe νP1 et νP2 sont comprises dans l'intervalle entre les fréquences porteuses amont vs et aval va c'est-à-dire que la différence νP2-νP1 des fréquences de pompe est inférieure à la différence νa-νs des fréquences porteuses. Il doit cependant être compris que la différence νP2-νP1 pourrait être au contraire supérieure à νa-νs.

## Revendications

**1/** Procédé de télécommunication à fibres optiques, procédé selon lequel des ondes optiques (W1, W2) portant un signal à transmettre (S) sont guidées dans une ligne constituée de fibres optiques présentant une dispersion chromatique, et selon lequel un phénomène de mélange à quatre ondes est provoqué en au moins un point intermédiaire de cette ligne par une lumière de pompage injectée dans une fibre de mélange pour compenser des effets de cette dispersion, ce procédé étant caractérisé par le fait que cette lumière de pompage est constituée de deux ondes de pompe (P1, P2), les polarisations (V1, V2) de ces deux ondes étant orthogonales l'une à l'autre, leurs fréquences optiques (νP1, νP2) étant sensiblement symétriques l'une de l'autre par rapport à une fréquence neutre (νo) annulant la dispersion chromatique de cette fibre de mélange (8).

**2/** Liaison à fibres optiques, cette liaison comportant:
- un émetteur (1) recevant un signal (S) représentatif d'une information à transmettre, cet émetteur émettant en réponse une onde de départ (W1) constituée par une onde porteuse optique qui est modulée pour porter ce signal, de sorte que cette onde présente un spectre de modulation (SW1) dont la largeur (LM) est représentative du débit d'information de ce signal,
- une ligne optique (L) présentant une entrée (2) pour recevoir ladite onde de départ, et une sortie (3) à distance de cette entrée pour restituer en réponse une onde d'arrivée (W2) formée à partir de cette onde de départ de manière à porter aussi le signal (S),
- et un récepteur (4) recevant l'onde d'arrivée (W2) pour restituer en réponse le signal (S),
- ladite ligne (L) comportant une succession de tronçons (T1, 8, T2) raccordés optiquement en série entre ladite entrée (2) et ladite sortie (3) et constitués de fibres optiques de la ligne, ces fibres étant aptes à guider des ondes optiques dont les fréquences optiques sont comprises dans un domaine spectral (DS) de cette ligne, ce domaine incluant les fréquences optiques (νs, νa) des ondes de départ et d'arrivée, cette succession incluant un tronçon dispersif amont (T1) et un tronçon dispersif aval (T2) dans lesquels lesdites fibres optiques de la ligne sont des fibres standard telles que ces deux tronçons présentent dans le domaine spectral de la ligne des dispersions chromatiques d'un même signe, ces dispersions provoquant des décalages progressifs entre diverses composantes spectrales d'ondes guidées par cette ligne de sorte que le signal restitué à la sortie de la ligne peut présenter des altérations de dispersion dues à ces dispersions, ces altérations de dispersion devant être au moins limitées,
cette ligne comportant encore pour cela au moins un ensemble de mélange (6) interposé optiquement en série entre lesdits tronçons dispersifs amont (T1) et aval (T2) et comportant lui-même:
- un dit tronçon constituant un tronçon de mélange (8) et présentant une dispersion chromatique nulle pour une fréquence neutre (νo) située dans le domaine spectral de la ligne, une entrée (10) de ce tronçon de mélange recevant une onde amont (W1) qui est une onde optique formée à partir de ladite onde de départ pour porter le signal (S) et qui est fournie en sortie dudit tronçon amont (T1) avec une fréquence porteuse amont (νs) inclue dans le domaine spectral de la ligne, une sortie (12) de ce tronçon de mélange (8) fournissant à une entrée dudit tronçon aval (T2) une onde aval (W2) qui a une fréquence porteuse (νa) inclue dans le domaine spectral de la ligne et à partir de laquelle ladite onde d'arrivée sera formée,
- et un système de pompage comportant lui-même:
- un générateur de pompe pour fournir une lumière de pompe spectralement centrée au voisinage de ladite fréquence neutre, cette lumière présentant une puissance suffisante pour provoquer des effets non linéaires dans le tronçon de mélange,
- un coupleur de pompe (14) pour injecter cette lumière de pompe dans le tronçon de mélange (8) codirectionnellement avec l'onde amont (W1) en un point d'injection de pompe (16) de manière à provoquer un phénomène de mélange à quatre ondes, ce phénomène engendrant l'onde aval (W2) avec une fréquence porteuse (νa) et un spectre de modulation (SW2) symétriques de la fréquence porteuse (νs) et du spectre de modulation (SW1) de l'onde amont (W1) par rapport à la lumière de pompage et avec une conjugaison de phase se traduisant par une inversion de phase entre cette onde aval et cette onde amont,
- et un filtre de sortie de mélange (18) pour transmettre seulement l'onde aval,
cette liaison étant caractérisée par le fait que le générateur de pompe comporte deux sources de pompe (G1, G2) fournissant la lumière de pompage sous la forme de deux ondes de pompe présentant deux fréquences optiques (νP1, νP2) symétriques par rapport à une fréquence médiane de pompe (νo), cette fréquence médiane étant au moins voisine de la fréquence neutre du tronçon de mélange (8), ces deux ondes de pompe présentant par ailleurs deux polarisations linéaires orthogonales (V1, V2), le coupleur de pompe (14) injectant ces deux ondes de pompe dans le tronçon de mélange (8), grâce à quoi l'onde aval (W2) engendrée par le phénomène de mélange à quatre ondes présente une puissance indépendante de la polarisation présentée par l'onde amont (W1) au point d'injection de pompe (16).

**3/** Liaison selon la revendication 2, caractérisée par le fait que les deux dites fréquences de pompe (νP1, νP2) présentent une différence (νP1-νP2) supérieure à la largeur (LM) du spectre de modulation de l'onde de départ.

**4/** Liaison selon la revendication 2, caractérisée par le fait que les deux ondes de pompe (P1, P2) présentent sensiblement une même puissance (K).

**5/** Liaison selon la revendication 2, caractérisée par le fait que les deux ondes de pompe (P1, P2) présentent des puissances supérieures à 1 mW, par exemple comprises entre 1 et 5 mW, le tronçon de mélange ayant une longueur supérieure à 1 km.

**6/** Liaison selon la revendication 2, caractérisée par le fait que le filtre de sortie de mélange (18) présente un taux de réjection supérieur à 20dB environ pour les ondes de pompe (P1, P2) et l'onde amont (W1).

**7/** Liaison selon la revendication 2 caractérisée par le fait que le système de pompage comporte en outre un amplificateur optique (20) pour amplifier à la fois les deux ondes de pompe (P1, P2) et l'onde amont (W1).

**8/** Système de pompage pour mélange à quatre ondes, caractérisé par le fait qu'il est conforme au système de pompage de la revendication 2.

**9/** Système de pompage selon la revendication 8, caractérisé par le fait que l'une au moins des deux sources de pompe (G1, G2) et le filtre de sortie de mélange (18) sont accordables.
